(19) Europäisches Patentamt
European Patent Office
Office européen des brevets

(11) EP 2 360 130 A1

(12) EUROPEAN PATENT APPLICATION
published in accordance with Art. 153(4) EPC

(43) Date of publication:
24.08.2011 Bulletin 2011/34

(51) Int Cl.:
*C04B 35/46* (2006.01)     *C01B 33/12* (2006.01)

(21) Application number: 09824821.4

(22) Date of filing: 05.11.2009

(86) International application number:
PCT/JP2009/068904

(87) International publication number:
WO 2010/053122 (14.05.2010 Gazette 2010/19)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 07.11.2008 JP 2008286609
22.06.2009 JP 2009147921

(71) Applicant: Sumitomo Chemical Company, Limited
Tokyo 104-8260 (JP)

(72) Inventors:
• MAKI, Hajime
Tsukuba-shi
Ibaraki 305-0821 (JP)
• UOE, Kousuke
Niihama-shi
Ehime 792-0025 (JP)
• IWASAKI, Kentaro
Niihama-shi
Ehime 792-0871 (JP)

(74) Representative: Vossius & Partner
Siebertstrasse 4
81675 München (DE)

(54) METHOD FOR PRODUCING ALUMINUM TITANATE CERAMIC

(57) The invention is to provide a novel process for producing aluminum titanate-based ceramics having a low coefficient of thermal expansion. The invention is a process for producing an aluminum titanate-based ceramic comprising firing a starting material mixture containing a titanium source powder, an aluminum source powder and a silicon source powder, wherein the particle diameter corresponding to a cumulative percentage of 50 % (D50) on a volume basis of the silicon source powder is not greater than 5 $\mu$m. The invention includes the process wherein the starting material mixture further contains a magnesium source powder.

Fig.1

**Description**

[TECHNICAL FIELD]

The present invention relates to a process for producing aluminum titanate-based ceramics.

[Background Art]

Aluminum titanate-based ceramics are ceramics containing titanium and aluminum as constitutive elements and showing a crystal pattern of aluminum titanate in X-ray diffraction spectrum, and are known as ceramics excellent in heat resistance. Aluminum titanate-based ceramics are used for sintering tools such as crucibles, and recently, the value of industrial applicability of the ceramics has been increasing as a material of constituting a ceramics falter for collecting fine carbon particles contained in exhaust gas discharged from internal combustion engines, such as diesel engines.

For such aluminum titanate-based ceramics, known is a process of firing a starting material mixture containing a powder of a titanium source compound, such as titania, and a powder of an aluminum source compound, such as alumina (Patent Reference 1). And the aluminum titanate-based ceramics having a low coefficient of thermal expansion are desired so as to be bearable in use for the above-mentioned applications.

[PRIOR ART REFERENCE]

[PATENT REFERENCE]

Patent Reference 1: WO2005/105704

[SUMMARY OF THE INVENTION]

[PROBLEMS THAT THE INVENTION IS TO SOLVE]

The problem of the invention is to provide a novel process for producing aluminum titanate-based ceramics having a low coefficient of thermal expansion.

[MEANS FOR SOLVING THE PROBLEMS]

The invention is a process for producing an aluminum titanate-based ceramics, comprising firing a starting material mixture containing a titanium source powder, an aluminum source powder, and a silicon source powder, wherein a particle diameter corresponding to a cumulative percentage of 50 % (D50) on a volume basis of the silicon source powder is not greater than 5 $\mu$m.
In the invention, the starting material mixture preferably further contains a magnesium source powder. A temperature of the firing is preferably not lower than 1300°C and not higher than 1650°C.
A particle diameter corresponding to a cumulative percentage of 90 % (D90) on a volume basis of the silicon source powder is preferably not greater than 17 $\mu$m. The silicon source powder is preferably a glass frit.
A particle diameter corresponding to a cumulative percentage of 50 % (D50) on a volume basis of the titanium source powder is preferably not smaller than 0.1 $\mu$m and not greater than 20 $\mu$m. A particle diameter corresponding to a cumulative percentage of 50 % (D50) on a volume basis of the aluminum source powder is preferably not smaller than 1 $\mu$m and not greater than 100 $\mu$m. When the magnesium source powder is used, a particle diameter corresponding to a cumulative percentage of 50 % (D50) on a volume basis of the magnesium source powder is preferably not smaller than 0.5 $\mu$m and not greater than 20 $\mu$m.
In the invention, relative to 100 parts by mass of a total of a titania ($TiO_2$)-equivalent amount of the titanium source powder to be used and an alumina ($Al_2O_3$)-equivalent amount of the aluminum source powder to be used, both of which are contained in the starting material mixture, the titania-equivalent amount of the titanium source powder to be used is preferably not smaller than 30 parts by mass and not greater than 70 parts by mass, the alumina-equivalent amount of the aluminum source powder to be used is preferably not smaller than 30 parts by mass and not greater than 70 parts by mass, and a silica ($SiO_2$)-equivalent amount of the silicon source powder to be used is preferably not smaller than 0.1 parts by mass and not greater than 20 parts by mass. When the magnesium source powder is contained in the starting material mixture, relative to 100 parts by mass of a total of a titania ($TiO_2$)-equivalent amount of the titanium source powder to be used and an alumina ($Al_2O_3$)-equivalent amount of the aluminum source powder to be used, a magnesia (MgO)-equivalent amount of the magnesium source powder to be used is preferably not smaller than 0.1 parts by mass and not greater than 10 parts by mass.

The starting material mixture is preferably mixed in dry condition or in wet condition. In the mixing in dry condition or in wet condition, the mixture is preferably ground and mixed in a co-presence of a grinding medium in a grinding container. The grinding medium is preferably alumina beads or zirconia beads, both of which have a particle diameter of not smaller than 1 mm and not greater than 100 mm. The grinding container is preferably vibrated with an amplitude of not smaller than 2 mm and not greater than 20 mm.

The process of the invention preferably further comprises a step of grinding a fired body of an aluminum titanate-based ceramics obtained after the firing of the starting material mixture.

[EFFECT OF THE INVENTION]

In accordance with the process of the invention, using a starting material mixture containing a titanium source powder, an aluminum source powder and a silicon source powder such as a glass frit, aluminum titanate-based ceramics having a low coefficient of thermal expansion can be produced.

[BRIEF DESCRIPTION OF THE DRAWINGS]

[Fig. 1] Fix.1 is a graph showing a relationship between the secondary particle diameter (D50) of the glass frit used as a silicon source powder in the invention and the coefficient of thermal expansion of the aluminum titanate-based ceramics obtained by the invention.
[Fig. 2] Fig.2 is a graph showing a relationship between the secondary particle diameter (D90) of the glass frit used as a silicon source powder in the invention and the coefficient of thermal expansion of the aluminum titanate-based ceramics obtained by the invention.

[MODE FOR CARRYING OUT THE INVENTION]

(Starting Material Mixture)

The starting material mixture used in the invention is a mixture of starting material powders containing one or more types of titanium source powder, one or more types of aluminum source powder and one or more types of silicon source powder, and preferably further containing one or more types of magnesium source powder. In the invention, a composite oxide such as magnesia spinel ($MgAl_2O_4$), that is, a material comprising two or more metal elements selected from among titanium, aluminum, and magnesium, is also included as a starting material mixture of the individual metal source powders. Further, the starting material mixture may contain aluminum titanate or aluminum magnesium titanate itself. For example, in the case of using aluminum magnesium titanate as the starting material mixture, the aluminum magnesium titanate corresponds to a starting material mixture containing a titanium source powder, an aluminum source powder and a magnesium source powder.

(Titanium Source Powder)

The titanium source powder used in the invention is not specifically restricted as long as the powder is one which contains a titanium element and from which an aluminum titanate-based ceramic can be synthesized by firing. As the titanium source powder, a powder of titanium oxide is preferred. Titanium oxide includes, for example, titanium (IV) oxide, titanium(III) oxide, and titanium(II) oxide. Titanium(IV) oxide is preferably used. Titanium oxide may be crystalline or amorphous. When titanium(IV) oxide is crystalline, the crystal form thereof includes an anatase form, a rutile form, and a brookite form, and an anatase form and a rutile forme are preferred.

As the titanium source powder, also usable is a powder of a material capable of being led to titania (titanium oxide) by firing in air. The material includes, for example, titanium salt, titanium alkoxide, titanium hydroxide, titanium nitride, titanium sulfide, and titanium. The titanium salt specifically includes titanium trichloride, titanium tetrachloride, titanium(IV) sulfide, titanium(VI) sulfide, and titanium(IV) sulfate. The titanium alkoxide specifically includes titanium(IV) ethoxide, titanium(IV) methoxide, titanium(IV) tert-butoxide, titaniuxn(IV) isobutoxide, titanium(IV) n-propoxide, titanium (IV) tetraisopropoxide, and their chelate compounds.

The titanium source powder may contain inevitable impurities derived from starting materials or those mixed in production steps.

The particle diameter of the titanium source powder is not specifically restricted, and the particle diameter thereof corresponding to a cumulative percentage of 50 % (D50) on a volume basis of the powder before mixed with other powders is preferably not smaller than 0.1 $\mu$m and not greater than 20 $\mu$m, more preferably not smaller than 0.1 $\mu$m and not greater than 10 $\mu$m, and most preferably not smaller than 0.1 $\mu$m and not greater than 1 $\mu$m. The particle diameter of the powder corresponding to a cumulative percentage of 90 % (D90) on a volume basis before being mixed with other powders is preferably not smaller than 0.1 $\mu$m and not greater than 20 $\mu$m, more preferably not smaller than 0.1 $\mu$m and not greater than 10 $\mu$m, and most preferably not smaller than 0.2 $\mu$m and not greater than 1.5 $\mu$m .

(Aluminum Source Powder)

The aluminum source powder used in the invention is not be specifically restricted as long as the powder is one which contains an aluminum element and from which an aluminum titanate-based ceramic can be synthesized by firing. As the aluminum source powder, alumina is preferred. Alumina may be crystalline or amorphous. When alumina is crystalline, the crystal form thereof includes a $\gamma$ form, a $\delta$ form, a $\theta$ form, and an $\alpha$ form, and an $\alpha$-form alumina is preferred.

As the aluminum source powder, also usable is a powder of a material capable of being led to alumina by firing in air. The material includes, for example, aluminum salt, aluminum alkoxide, aluminum hydroxide, and aluminum metal.

The aluminum source powder may contain inevitable impurities derived from starting materials or those mixed in production steps.

The aluminum salt may be a salt with an inorganic acid (inorganic salt), or a salt with an organic acid (organic salt). The inorganic salt specifically includes, for example, nitrates, such as aluminum nitrate, ammonium aluminum nitrate; and carbonates, such as ammonium aluminum carbonate. The organic salt includes aluminum oxalate, aluminum acetate, aluminum stearate, aluminum lactate, and aluminum laureate.

The aluminum alkoxide includes aluminum isopropoxide, aluminum ethoxide, aluminum sec-butoxide, and aluminum tert-butoxide.

Aluminum hydroxide may be crystalline or amorphous. When aluminum hydroxide is crystalline, the crystal form thereof includes, for example, a gibbsite form, a bayerite form, a norstrandite form, a boehmite form, and a pseudo-boehmite form. Amorphous aluminum hydroxide includes, for example, an aluminum hydrolyzate obtained by hydrolysis of an aqueous solution of a water-soluble aluminum compound, such as aluminum salt, and aluminum alkoxide.

The particle diameter of the aluminum source powder corresponding to a cumulative percentage of 50 % (D50) on a volume basis before being mixed with other powders is preferably not smaller than 1 $\mu$m and not greater than 100 $\mu$m, more preferably not smaller than 10 $\mu$m and not greater than 80 $\mu$m, and most preferably not smaller than 20 $\mu$m and not greater than 60 $\mu$m. The particle diameter of the powder corresponding to a cumulative percentage of 90 % (D90) on a volume basis is preferably not smaller than 1 $\mu$m and not greater than 200 $\mu$m, more preferably not smaller than 10 $\mu$m and not greater than 150 $\mu$m, and most preferably not smaller than 30 $\mu$m and not greater than 100 $\mu$m.

(Silicon Source Powder)

The silicon source powder used in the invention is not specifically restricted as long as the powder is one which contains a silicon element and from which an aluminum titanate-based ceramic can be synthesized by firing. As the silicon source powder, a powder of silicon oxide is preferred. Silicon oxide includes silicon dioxide, and silicon monoxide.

As the silicon source powder contained in the starting material mixture, also usable is a powder of a material capable of being led to silicon oxide (silica) by firing in air. The material includes, for example, silicic acid, silicon carbide, silicon nitride, silicon sulfide, silicon tetrachloride, silicon acetate, sodium silicate, sodium orthosilicate, feldspar, and glass frit.

As the specific silicon source powder, glass frit and the like is preferably used from the viewpoint of the easiness of the industrial availability and of the stability of the constitutive composition. Glass frit is flaky or powdery ground glass. The glass to constitute glass frit includes silicate glass, and preferred is an ordinary silicate glass comprising silicic acid (silicon dioxide, $SiO_2$ as the main ingredient (accounting for not smaller than 50% by mass of all the ingredients). As the other constitutive ingredients of the silicate glass, the glass may contain alumina ($Al_2O_3$), sodium oxide ($Na_2O$), potassium oxide ($K_2O$) calcium oxide (CaO) and magnesia (MgO), like ordinary silicate glass. The glass preferably contains $ZrO_2$ for enhancing the hot water resistance of the glass itself, and the content of $ZrO_2$ is preferably not smaller than 0.1 % by mass and not greater than 10 % by mass. The glass frit for use preferably has an deformation point of not lower than 700°C from the viewpoint of enhancing the thermal decomposition resistance of the aluminum titanate-based ceramics to be obtained.

As the silicon source powder, also usable is a powder that serves also as an aluminum source powder. The powder includes, for example, a powder of feldspar.

The silicon source powder may contain inevitable impurities derived from starting materials or those mixed in production steps.

The particle diameter of the silicon source powder corresponding to a cumulative percentage of 50 % (D50) on a volume basis before being mixed with other powders is not greater than 5 $\mu$m, preferably not smaller than 1 $\mu$m and not greater than 5 $\mu$m, more preferably not smaller than 2 $\mu$m and not greater than 4 $\mu$m, and most preferably not smaller than 3 $\mu$m and not greater than 4 $\mu$m. Using the silicon source powder having such a particle size distribution makes it possible to produce aluminum titanate-based ceramics having a coefficient of thermal expansion of $1 \times 10^{-6}$ ($K^{-1}$) or less even when the starting material mixture is fired at a temperature of 1650°C or lower, preferably 1600°C or lower.

The particle diameter of the silicon source powder corresponding to a cumulative percentage of 90 % (D90) on a volume basis before being mixed with other powders is preferably not greater than 17 $\mu$m, more preferably not smaller than 10 $\mu$m and not greater than 16 $\mu$m, and most preferably not smaller than 12 $\mu$m and not greater than 16 $\mu$m.

The particle diameter of the silicon source powder having the above-mentioned particle size distribution is generally smaller than the diameter of commercial powders. Therefore the silicon source powder is prepared by previously grinding a commercial powder and the like. The grinding method is not specifically restricted as long as the method can give the above-mentioned particle size distribution. A method of grinding in a grinding container in the co-presence of a grinding medium may be preferably used.

Specifically, for example, a silicon source powder is put into a grinding container singly or optionally in combination with any other starting material powder (especially all starting material powders), together with a grinding medium, and then the grinding container is vibrated or rotated to thereby grind the silicon source powder. When the silicon source powder and other starting material powders are put into the container, the starting material powders are mixed and ground at the same time. On this occasion, the grinding container to be used is generally formed of a metal material, such as stainless steel, and its inner surface may be coated with a fluororesin, a silicone resin, an urethane resin and the like. The inner capacity of the grinding container may be generally not smaller than 1 time by volume and not greater than 4 times by volume, preferably not smaller than 1.2 times by volume and not greater than 3 times by volume as much as the total volume of the starting material powders and the grinding medium.

The grinding medium include, for example, alumina beads or zirconia beads having a diameter of not smaller than 1 mm and not greater than 100 mm, and preferably not smaller than 5 mm and not greater than 50 mm. The amount of the grinding medium to be used may be generally not smaller than 1 time by mass and not greater than 1000 times by mass, preferably not smaller than 5 times by mass and not greater than 100 times by mass as much as the total amount of the starting material powders (when a powder of a composite oxide and the like such as aluminum magnesium titanate is used as the starting material powder, this is the overall total amount including the powder of composite oxide and the like, and the same shall apply hereinafter).

For vibrating or rotating the grinding container, for example, an ordinary grinding machine may be used, such as a vibration mill, a ball mill, a planetary mill, a high-speed rotating grinder (pin mill, etc). A vibration mill is preferably used from the viewpoint of easiness of operation in industrial scale. When the grinding container is vibrated, the amplitude is generally not smaller than 2 mm and not greater than 20 mm, and preferably not greater than 12 mm. The grinding may be carried out by a continuous process or by a batch process, and continuous process is preferred from the viewpoint of easiness of operation in industrial scale.

The time for the grinding is generally not shorter than 1 minute and not longer than 6 hours, preferably not shorter than 1.5 minutes and not longer than 2 hours, more preferably not shorter than 10 minutes and not longer than 2 hours, and most preferably not shorter than 20 minutes and not longer than 1.5 hours. Additives, such as a grinding aid and a deflocculant, may be added to the grinding container.

(Magnesium Source Powder)

The magnesium source powder used in the invention is not specifically restricted as long as the powder is one which contains a magnesium element and from which an aluminum titanate-based ceramics can be synthesized by firing, and is, for example, magnesia (magnesium oxide). The magnesium source powder also includes a powder of a material capable of being led to magnesia by firing in air, and magnesia is preferred.

The material capable of being led to magnesia by firing in air includes, for example, magnesium salt, magnesium alkoxide, magnesium hydroxide, magnesium nitride, and metal magnesium. The magnesium salt specifically includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate. The magnesium alkoxide specifically includes, for example, magnesium methoxide, and magnesium ethoxide.

As the magnesium source powder, also usable is a powder containing an aluminum source powder in addition to a magnesium source powder. The powder includes, for example, a powder of magnesia spinel ($MgAl_aO_4$).

The magnesium source powder may contain inevitable impurities derived from starting materials or those mixed in production steps.

The particle diameter of the magnesium source powder corresponding to a cumulative percentage of 50 % (D50) on a volume basis before being mixed with other powders is preferably not smaller than 0.5 $\mu$m and not greater than 20 $\mu$m, and more preferably not smaller than 1 $\mu$m and not greater than 10 $\mu$m. The particle diameter of the powder corresponding to a cumulative percentage of 90 % (D90) on a volume basis is preferably not smaller than 1 $\mu$m and not greater than 50 $\mu$m, and more preferably not smaller than 5 $\mu$m and not greater than 30 $\mu$m.

(Composition of Starting Material Mixture)

The titania-equivalent amount of the titanium source powder to be used is generally not smaller than 30 parts by mass and not greater than 70 parts by mass, and preferably not smaller than 40 parts by mass and not greater than 60 parts by mass relative to 100 parts by mass of the total amount of the titania ($TiO_2$)-equivalent amount of the titanium source powder to be used and the alumina ($Al_2O_3$)-equivalent amount of the aluminum source powder to be used in the starting material mixture (hereinafter referred to as "total titania/alumina amount"). The alumina-equivalent amount of the aluminum source powder to be used is generally not smaller than 30 parts by mass and not greater than 70 parts by mass, and preferably not smaller than 40 parts by mass and not greater than 60 parts by mass.

The silica ($SiO_2$)-equivalent amount of the silicon source powder to be used is generally not smaller than 0.1 parts by mass and not greater than 20 parts by mass, and preferably not smaller than 0.1 parts by mass and not greater than 10 parts by mass relative to 100 parts by mass of the total titania/alumina amount.

When the starting material mixture further contains a magnesium source powder, the magnesia (MgO)-equivalent amount of the magnesium source powder to be used is generally not smaller than 0.1 parts by mass and not greater than 10 parts by mass, and preferably not smaller than 0.1 parts by mass and not greater than 8 parts by mass relative to 100 parts by mass of the total titania/alumina amount.

(Mixing of Starting Material Powder)

In the process of the invention, in general, the starting material mixture can be obtained by mixing the starting material powders mentioned above. For the mixing method, any of a method of mixing in a dry condition (dry mixing method) or a method of mixing in a wet condition (wet mixing method) may be adopted. The starting material mixture may contain particulate aluminum titanate and the like.

(1) Dry Mixing Method

In the case of mixing in a dry condition, for example, the above-mentioned starting material powders may be mixed and stirred in a grinding container without being dispersed in a liquid medium. The starting material powders may be stirred in the co-presence of a grinding medium, thereby being ground at the same time.

The grinding container to be used is generally formed of a metal material such as stainless steel, and its inner surface may be coated with a fluororesin, a silicone resin, an urethane resin and the like. The inner capacity of the grinding container is generally not smaller than 1 time by volume and not greater than 4 times by volume, and preferably not smaller than 1.2 times by volume and not greater than 3 times by volume as much as the total volume of the starting material powders and the grinding medium.

The grinding medium include, for example, alumina beads or zirconia beads having a diameter of not smaller than 1 mm and not greater than 100 mm, and preferably not smaller than 5 mm and not greater than 50 mm. The amount of the grinding medium to be used is generally not smaller than 1 time by mass and not greater than 1000 times by mass, and preferably not smaller than 5 times by mass and not greater than 100 times by mass as much as the total amount of the starting material powders (when a powder of a composite oxide and the like, such as aluminum magnesium titanate, is used as the starting material powder, this is the overall total amount including the powder of composite oxide and the like, and the same shall apply hereinafter).

When the grinding of the starting material powders is carried out simultaneously with the mixing, for example, by vibrating or rotating a grinding container after putting the starting material powders with a grinding medium into the grinding container, the starting material powders are mixed and ground at the same time. For vibrating or rotating the grinding container, for example, an ordinary grinding machine, such as a vibration mill, a ball mill, a planetary mill, and a high-speed rotating grinder (pin mill and the like) may be used. A vibration mill is preferably used from the viewpoint of easiness of operation in industrial scale. When the grinding container is vibrated, the amplitude is generally not smaller than 2 mm and not greater than 20 mm, and preferably not greater than 12 mn. The grinding may be attained by a continuous process or by a batch process, but is preferably continuous as easy in an industrial scale.

The time for the grinding is generally not shorter than 1 minute and not longer than 6 hours, and preferably not shorter than 1.5 minutes and not longer than 2 hours. In grinding the starting material powders in dry condition, additives, such as a grinding aid and a deflocculant, may be added.

The grinding aid includes, for example, monoalcohols, such as methanol, ethanol, and propanol; dialcohols, such as propylene glycol, and polypropylene glycol, ethylene glycol; amines, such as triethanolamine; higher fatty acids, such as palmitic acid, stearic acid, and oleic acid; carbon materials, such as carbon black, and graphite. One or more of these may be used either singly or in combination.

When additives are used, the total amount thereof to be used is generally not smaller than 0.1 parts by mass and not greater than 10 parts by mass, preferably not smaller than 0.5 parts by mass and not greater than 5 parts by mass, and more preferably not smaller than 0.75 parts by mass and not greater than 2 parts by mass relative to 100 parts by mass of the total of the starting material powders.

(2) Wet Mixing Method:

In the case of mixing in a wet condition, for example, a starting material powder, such as a silicon source powder, which is kept dispersed in a solvent may be mixed with other starting material powders. In general, a silicon source material which is kept dispersed in a solvent is mixed with other starting material powders. In this case, water is generally used as the solvent, and ion-exchanged water is preferred as containing few impurities. The amount of the solvent to be used is generally not smaller than 20 parts by mass and not greater than 1000 parts by mass, and preferably not smaller than 30 parts by mass and not greater than 300 parts by mass relative to 100 parts by mass of the total of the starting material powders.

In the case of mixing in wet condition, a dispersant may be added to the solvent. The dispersant includes, for example, inorganic acids, such as nitric acid, hydrochloric acid, and sulfuric acid; organic acids, such as oxalic acid, citric acid, acetic acid, malic acid, and lactic acid; alcohols such as methanol, ethanol, and propanol; surfactants, such as ammonium polycarboxylate. The amount of the dispersant to be used is generally not smaller than 0.1 parts by mass and not greater than 20 parts by mass, and preferably not smaller than 0.2 parts by mass and not greater than 10 parts by mass relative to 100 parts by mass of the total amount of the solvent.

In the wet mixing method, some other starting material powders than the silicon source powder (titanium source powder, aluminum source powder, magnesium source powder) may be dissolved in a solvent and then mixed, depending on the type thereof, and these starting material powders dissolved in a solvent are again precipitated as a solid through solvent removal by evaporation.

In the wet mixing method, the powders are preferably mixed by the use of a grinding machine, such as a media-assisted stirring mill, a ball mill, and a vibration mill. When mixed by the use of a grinding machine, the titanium source powder, the aluminum source powder, the magnesium source powder and the silicon source powder, such as glass frit, can be ground and mixed all together to give a starting material mixture having a more uniform composition.

The wet mixing method includes, for example, a method of performing only stirring treatment alone in an ordinary liquid solvent. As the liquid solvent, for example, usable are monoalcohols, such as methanol, ethanol, butanol, and propanol; dialcohols, such as propylene glycol, polypropylene glycol, and ethylene glycol; or ion-exchanged water. Ion-exchanged water is further preferred.

Also in the wet mixing method, starting material powders may be stirred and ground at the same time in a grinding container in the co-presence of a grinding medium. For example, the starting material powders and the grinding medium may be put into a grinding container, and then the grinding container is vibrated or rotated to grind the powders therein.

The grinding container may be the same as that used in the dry mixing method. The inner capacity of the grinding container is generally not smaller than 1 time by volume and not greater than 4 times by volume, and preferably not smaller than 1.2 times by volume and not greater than 3 times by volume as much as the total volume of the starting material powders, the grinding medium and the solvent.

The type, the size and the amount to be used of the grinding medium may be the same as those in the dry mixing method.

The grinding machine to be used for vibrating or rotating the grinding container, the grinding condition (amplitude, etc.) and the time for the grinding may be also the same as those in the dry mixing method.

In grinding the starting material powders in wet condition, additives, such as a grinding aid and a deflocculant, may be added in addition to the grinding medium.

The type of the grinding aid to be used and the amount thereof to be used may be the same as those in the dry mixing method.

After the powders are mixed in the above-mentioned wet condition, the solvent is removed to give the starting material mixture for use in the invention. The solvent removal may be carried out generally through solvent evaporation. In removing the solvent, the temperature condition and the pressure condition are not specifically restricted, and the mixture may be dried in air at room temperature, or may be dried in vacuum or may be dried under heat. The drying method may be either static drying or fluidized drying. The temperature in drying under heat is not specifically restricted, and may be generally not lower than 50°C and not higher than 250°C. The device to be used for drying under heat includes, for example, a multistage drier, a slurry drier, and a spray drier.

(Firing Step)

In the process of the invention, the powdery starting material mixture prepared in the manner as mentioned above may be fired directly as it is in a powder form, and then molded into a molded body, or after the powdery starting material mixture is molded, the resulting molded body may be fired. The powdery starting material mixture may be fired and then molded into a molded body, and the resulting molded body may be further fired.

The firing temperature is generally not lower than 1300°C, and preferably not lower than 1400°C, and is generally not higher than 1650°C, preferably not higher than 1600°C, and more preferably not higher than 1550°C. The heating rate up to the firing temperature is not specifically restricted, but it is generally not slower than 1°C/hr and not faster than 500°C/hr. The process of the invention may contain a step of the keeping at a prescribed temperature during firing.

The firing is carried out generally in air, and depending on the type and the blend ratio of the starting material powders to be used (that is, the titanium source powder, the aluminum source powder, the magnesium source powder and the silicon source powder to be used), the firing may be carried out in an inert gas, such as nitrogen gas or argon gas, or may be carried out in a reducing gas, such as carbon monoxide gas or hydrogen gas. The water vapor partial pressure in the atmosphere may be reduced in firing.

In general, the firing is attained using an ordinary firing furnace, such as a tubular electric furnace, a boxy electric furnace, a tunnel furnace, a far-IR furnace, a microwave heating furnace, a shaft furnace, a reflection furnace, a rotary furnace, and a roller hearth furnace. The firing may be carried out by a batch process or by a continuous process, and may be carried out in a static mode or a fluidized mode.

The time to be taken for the firing may be a time enough for transition of the starting material mixture into an aluminum titanate-based ceramic, and may vary depending on the amount of the starting material mixture, the type of the firing furnace, the firing temperature, the firing atmosphere and others, but may be generally not shorter than 10 minutes and not longer than 24 hours.

When a massive aluminum titanate-based ceramic is produced as the fired body, the fired body may be further ground to give an aluminum titanate-based ceramic powder. The grinding may be carried out, for example, using an ordinary grinding machine such as a hand grinder, a mortar, a ball mill, a vibration mill, a planetary mill, a media-assisted stirring mill, a pin mill, a jet mill, a hammer mill, and a roll mill. The aluminum titanate-based ceramic powder obtained by grinding may be classified by an ordinary process.

In the above-mentioned process, a fired body of the intended aluminum titanate-based ceramic having a low coefficient of thermal expansion can be obtained.

The aluminum titanate-based ceramic (powder or molded body and the like) obtained in the process of the invention includes a crystal pattern of aluminum titanate in X-ray diffraction spectrum, and in addition, the ceramic may further contain any other crystal pattern of, for example, silica, alumina, titania and the like. When the aluminum titanate-based ceramic is aluminum magnesium titanate ($Al_{2(1-x)}Mg_xTi_{(1+x)}O_5$), the value x is not smaller than 0.01, preferably not smaller than 0.01 and not greater than 0.7, and more preferably not smaller than 0.02 and not greater than 0.5.

(Molding Step)

For molding the starting material mixture before firing or after firing, an ordinary molding method can be adopted, and uniaxial molding or extrusion molding may be used. The molding machine includes a uniaxial press, an extruder, a tabletter, and a granulator.

In extrusion molding, the starting material mixture may be molded adding with a pore-forming agent, a binder, a lubricant, a plasticizer, a dispersant, a solvent and the like. The pore-forming agent includes carbon materials, such as graphite; resins, such as polyethylene, polypropylene, and polymethyl methacrylate; vegetable materials, such as starch, nutshell, walnut shell, and corm; ice, and dry ice. The binder includes celluloses, such as methyl cellulose, carboxymethyl cellulose, sodium carboxymethyl cellulose; alcohols, such as polyvinyl alcohol; salts, such as lignin sulfonate salt; waxes, such as paraffin wax, and microcrystalline wax; thermoplastic resins, such as EVA, polyethylene, polystyrene, liquid-crystalline polymer, engineering plastics. The lubricant and the plasticizer include alcohols such as glycerin; higher fatty acids such as caprylic acid, lauric acid, palmitic acid, alginic acid, oleic acid, and stearic acid; metal stearates such as aluminum stearate. As the solvent, water such as ion-exchanged water is generally used. Preferably, ion-exchanged water and the like for use herein are controlled for the temperature. Some materials for a pore-forming agent or a binder may serve both as a pore-forming agent and a binder. The materials may be any one capable of bonding the particles in molding to thereby keep the molded body, and capable of being fired away in the subsequent firing step to form pores. The materials specifically include polyethylene.

Not specifically defined, the form of the molded body obtained by molding the starting material mixture includes, for example, a honeycomb structure, a spherical structure, a cubic structure, and a rectangular block structure. A honeycomb structure is preferred.

[Examples]

The invention is described in detail with reference to the following Examples; however, the invention should not be restricted by these Examples. In the following Examples and Comparative Examples, samples were analyzed by the following methods for measurement.

(Determination of aluminum titanate conversion ratio)

The aluminum titanate conversion ratio (AT conversion ratio) of aluminum titanate was calculated from the integrated intensity ($I_T$) of the peak (titania-rutile phase (110) face) appearing at the position of $2\theta = 27.4°$, and the integrated intensity ($I_{AT}$) of the peak (aluminum titanate phase (230) face or aluminum magnesium titanate phase (230) face) appearing at the position of $2\theta = 33.7°$ in a powdery X-ray diffraction spectrum, according to the formula (1).

$$\text{AT Conversion Ratio} = I_{AT}/(I_T + I_{AT}) \times 100\ (\%) \qquad (1)$$

(Determination of Coefficient of Thermal Expansion)

The coefficient of thermal expansion of the molded fired body of aluminum titanate-based ceramic was determined according to the following operation. A sample was cut out of the unground, molded fired body in each of Examples and Comparative Examples, and heating the sample up to 600°C at 200°C/hr. Next, using a thermal mechanical analyzer (TMA (SII Technology's TMA6300)), the sample was heated up to 1000°C at 600°C/hr, and the coefficient of thermal expansion [$K^{-1}$] of the sample during the period was determined.

(Determination of Secondary Particle Diameter)

The secondary particle diameter was calculated as a particle diameter corresponding to a cumulative percentage of 50 % (D50) and a cumulative percentage of 90 % (D90) on a volume basis, using a laser diffractiometric particle size distribution analyzer (Nikkiso's "Microtrac HRA (X-100)").

(Example 1)

Into a grinding container made of alumina (inner capacity of 50 L), 5000 g of glass frit (Takara Standard's Code "CK-0832M2", having D50 of 6.0 $\mu$m and D90 of 18.4 $\mu$m) was chaged together with 80 kg of alumina beads (diameter of 15 mm). Next, the grinding container was vibrated at an amplitude of 10 mm, a vibration frequency of 1200/min, and a power of 5.5 kW for 30 minutes to thereby grind the glass frit in the grinding container to give a silicon source powder. After the grinding, D50 of the glass frit was 3.6 $\mu$m and D90 thereof was 14.6 ($\mu$m.
Into a grinding container made of alumina (inner capacity of 50 L), 3991 g of a titanium oxide powder (DuPont's "R-900" having D50 of 0.49 $\mu$m and D90 of 0.63 $\mu$m), 5100 g of an $\alpha$-alumina powder (having a BET surface area of 0.6 m$^2$/g, D50 of 40.2 $\mu$m and D90 of 70.2 $\mu$m), 546 g of a magnesia powder (Saint-Gobain's magnesia spinel having D50 of 5.47 $\mu$m and D90 of 15.25 $\mu$m) and 364 g of the above-mentioned ground powder of glass frit were charged together with 80 kg of alumina beads (diameter of 15 mm). The total volume of the mixture of these titanium oxide powder, $\alpha$-alumina powder, magnesia powder and glass frit was about 10000 cm$^3$. On this occasion, relative to 100 parts by mass of the total of the titania-equivalent amount of the titanium source powder to be used and the alumina-equivalent amount of the aluminum source powder to be used in the starting material mixture, the titania-equivalent amount of the titanium source powder to be used was 43.9 parts by mass, the almnina-equivalent amount of the aluminum source powder used was 56.1 parts by mass, the magnesia-equivalent amount of the magnesium source powder to be used is 6.0 parts by mass, and the silica-equivalent amount of the silicon source powder t be used was 4.0 parts by mass. Next, the grinding container was vibrated with a vibration mill at an amplitude of 10 mm, a vibration frequency of 1200 times/min, and a power of 5.5 kW for 30 minutes to thereby grind the mixture in the grinding container to give a starting material mixture.
With a uniaxial press, 3 g of the starting material mixture was molded under a pressure of 0.3 t/cm$^2$ to give a molded body of $\phi$20 mm. The molded body was heated up to 1450°C at a heating rate of 300°C/hr in a boxy electric furnace, and kept at the same temperature for 4 hours thereby the molded body was fired. Next, the molded fired body was left cooled to room temperature to give a molded fired body. The molded fired body was ground in a mortar to give a powder of aluminum titanate-based ceramic.

(Example 2)

A molded fired body of aluminum titanate-based ceramic and a powder thereof were obtained in the same manner as in Example 1, except that, the firing temperature of the starting material mixture was 1500°C (the mixture was heated up to 1500°C at a heating rate of 300°C/hr and kept at the same temperature for 4 hours).

By a powdery X-ray diffraction method, the diffraction spectra of the aluminum titanate-based ceramic powders obtained in Examples 1 and 2 were analyzed, and both spectra showed a crystal peak of aluminum magnesium titanate. The AT conversion ratios of these powders were analyzed, and both were 100 %. The coefficients of thermal expansion of these powders were analyzed, the value was $0.75 \times 10^{-6}$ $(K^{-1})$ in Example 1, and the value was $0.78 \times 10^{-6}$ $(K^{-1})$ in Example 2.

(Example 3)

A molded fired body of aluminum titanate-based ceramic and a powder thereof were obtained in the same manner as in Example 1, except that, the grinding time (vibration time) for glass frit (Takara Standard's Code "CK-0832M2") with a vibration mill in preparing the silicon source powder was 60 minutes. After ground, the glass frit had D50 of 3.3 $\mu$m and D90 of 13.3 $\mu$m.

(Example 4)

A molded fired body of aluminum titanate-based ceramic and a powder thereof were obtained in the same manner as in Example 3, except that, the firing temperature of the starting material mixture was 1500°C (the mixture was heated up to 1500°C at a heating rate of 300°C/hr and kept at the same temperature for 4 hours).

By a powdery X-ray diffraction method, the diffraction spectra of the aluminum titanate-based ceramic powders obtained in Examples 3 and 4 were analyzed, and both spectra showed a crystal peak of aluminum magnesium titanate. The AT conversion ratios of these powders were analyzed, and both ratios at each firing temperature were 100%. The values of the coefficient thermal expansion were measured, the value was $0.73 \times 10^{-6}$ $(K^{-1})$ in Example 3, and the value was $0.73 \times 10^{-6}$ $(K^{-1})$ in Example 4.

(Comparative Example 1)

As a comparative example, a molded fired body of aluminum titanate-based ceramic and a powder thereof were obtained in the same manner as in Example 1, except that, the starting material powders were mixed without pre-grinding treatment of the glass frit.

(Comparative Example 2)

As a comparative example, a molded fired body of aluminum titanate-based ceramic and a powder thereof were obtained in the same manner as in Example 2, except that, the starting material powders were mixed without pre-grinding treatment of the glass frit.

According to a powder X-ray diffraction method, the diffraction spectra of the powders obtained in Comparative Examples 1 and 2 were analyzed, and both spectra showed a crystal peak of aluminum magnesium titanate. The AT conversion ratios of these powders were calculated, and both were 100 %. The values of the coefficient of thermal expansion were measured, and the value was $1.40 \times 10^{-6}$ $(K^{-1})$ in Comparative Example 1, and the value was $1.15 \times 10^{-6}$ $(K^{-1})$ in Comparative Example 2.

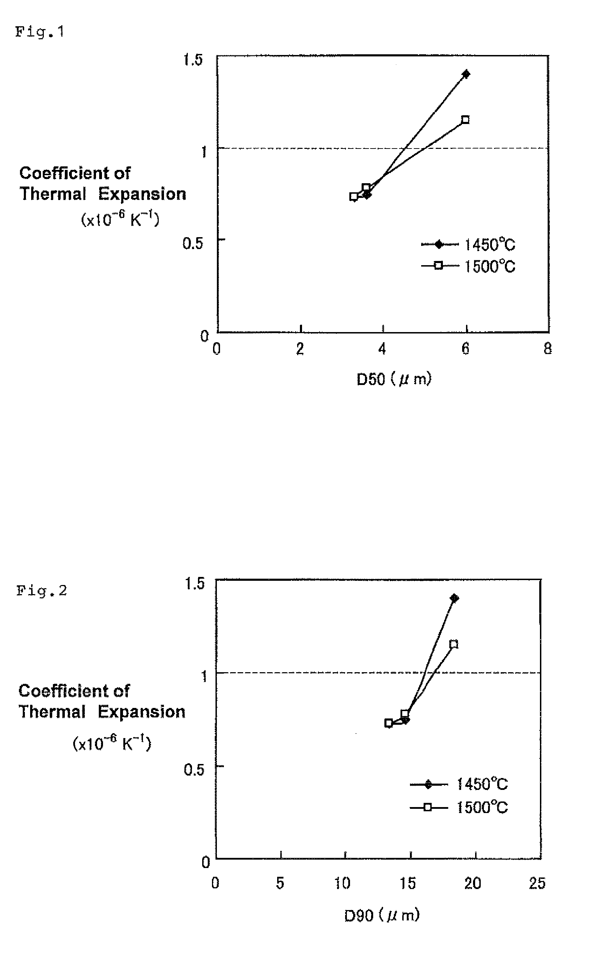

The relationship between the coefficient of thermal expansion of the aluminum titanate-based ceramics (molded fired bodies) obtained in Examples 1 to 4 and Comparative Examples 1 and 2, and the secondary particle diameter (D50) of the glass frit used as the silicon source powder is shown as a graph in Fig. 1 at the respective firing temperatures (1450°C in Examples 1 and 3 and Comparative Example 1; and 1500°C in Examples 2 and 4 and Comparative Example 2). As known from Fig. 1, the coefficient of thermal expansion was not greater than $1 \times 10^{-6}$ $(K^{-1})$ when the secondary particle diameter (D50) of the glass frit was about 5 $\mu$m or less (preferably about 4 $\mu$m or less).

Same as in Fig. 1, the relationship between the coefficient of thermal expansion of each aluminum titanate-based ceramic (molded fired body) and the secondary particle diameter (D90) of the glass frit is shown in Fig. 2. As known from Fig. 2, the coefficient of thermal expansion was not greater than than $1 \times 10^{-6}$ $(K^{-1})$ when the secondary particle diameter (D90) of the glass frit was about 17 $\mu$m or less (preferably about 16 $\mu$m or less).

Embodiments and Examples illustrated this time should be considered as exemplifications in all aspects but not as limitative ones. The scope of the invention is indicated not by the above-mentioned description but by the claims, and is intended to comprise all variations in the meaning and in the range of claims-equivalent.

[INDUSTRIAL APPLICABILITY]

The molded body of aluminum titanate-based ceramic obtained by the process of the invention is usable, for example, for tools for firing furnaces such as crucibles, saggers, and refractories; exhaust gas filters and catalyst carriers for use for exhaust gas purification in internal combustion engines such as diesel engines, gasoline engines; ceramic filters for use for filtration filters for edibles such as beer, and selective permeation filters for selectively permeating gas components formed in oil purification, such as carbon monoxide, carbon dioxide, nitrogen, oxygen; electronic parts such as substrates, capacitors, etc.

**Claims**

1. A process for producing an aluminum titanate-based ceramic, comprising firing a starting material mixture containing a titanium source powder, an aluminum source powder, and a silicon source powder, wherein a particle diameter corresponding to a cumulative percentage of 50 % (D50) on a volume basis of the silicon source powder is not greater than 5 $\mu$m.

2. The process according to claim 1, wherein the starting material mixture further contains a magnesium source powder.

3. The process according to claim 1, wherein a temperature of the firing is not lower than 1300°C and not higher than 1650°C.

4. The process according to claim 1, wherein a particle diameter corresponding to a cumulative percentage of 90 % (D90) on a volume basis of the silicon source powder is not greater than 17 $\mu$m.

5. The process according to claim 1, wherein the silicon source powder is a glass frit.

6. The process according to claim 1, wherein a particle diameter corresponding to a cumulative percentage of 50 % (D50) on a volume basis of the titanium source powder is not smaller than 0.1 $\mu$m and not greater than 20 $\mu$m.

7. The process according to claim 1, wherein a particle diameter corresponding to a cumulative percentage of 50 % (D50) on a volume basis of the aluminum source powder is not smaller than 1 $\mu$m and not greater than 100 $\mu$m.

8. The process according to claim 2, wherein a particle diameter corresponding to a cumulative percentage of 50 % (D50) on a volume basis of the magnesium source powder is not smaller than 0.5 $\mu$m and not greater than 20 $\mu$m.

9. The process according to claim 1, wherein relative to 100 parts by mass of a total of a titania ($TiO_2$)-equivalent amount of the titanium source powder to be used and an alumina ($Al_2O_3$)-equivalent amount of the aluminum source powder to be used, both of which are contained in the starting material mixture, the titania-equivalent amount of the titanium source powder to be used is not smaller than 30 parts by mass and not greater than 70 parts by mass, the alumina-equivalent amount of the aluminum source powder to be used is not smaller than 30 parts by mass and not greater than 70 parts by mass, and a silica ($SiO_2$)-equivalent amount of the silicon source powder to be used is not smaller than 0.1 parts by mass and not greater than 20 parts by mass.

10. The process according to claim 2, wherein relative to 100 parts by mass of a total of a titania ($TiO_2$)-equivalent amount of the titanium source powder to be used and an alumina ($Al_2O_3$)-equivalent amount of the aluminum source powder to be used, a magnesia (MgO)-equivalent amount of the magnesium source powder to be used is not smaller than 0.1 parts by mass and not greater than 10 parts by mass.

11. The process according to claim 1, wherein the starting material mixture is mixed in dry condition or in wet condition.

12. The process according to claim 11, wherein in the mixing in dry condition or in wet condition, the mixture is ground and mixed in a co-presence of a grinding medium in a grinding container.

13. The process according to claim 12, wherein the grinding medium is alumina beads or zirconia beads, both of which have a particle diameter of not smaller than 1 mm and not greater than 100 mm.

14. The process according to claim 12, wherein the grinding container is vibrated with an amplitude of not smaller than 2 mm and not greater than 20 mm.

15. The process according to claim 1, further comprising a step of grinding a fired body of an aluminum titanate-based ceramic obtained after the firing of the starting material mixture.

Fig.1

Coefficient of
Thermal Expansion
$(\times 10^{-6}\ K^{-1})$

- 1450°C
- 1500°C

D50 ($\mu$ m)

Fig.2

Coefficient of
Thermal Expansion

$(\times 10^{-6}\ K^{-1})$

- 1450°C
- 1500°C

D90 ($\mu$ m)

## INTERNATIONAL SEARCH REPORT

| | International application No. |
|---|---|
| | PCT/JP2009/068904 |

**A. CLASSIFICATION OF SUBJECT MATTER**
*C04B35/46*(2006.01)i, *C01B33/12*(2006.01)i

According to International Patent Classification (IPC) or to both national classification and IPC

**B. FIELDS SEARCHED**

Minimum documentation searched (classification system followed by classification symbols)
C04B35/46, C01B33/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-026508 A  (Tsutomu FUKUDA),<br>29 January 2004 (29.01.2004),<br>claims 1 to 3; paragraphs [0022] to [0024];<br>examples | 1-4,6-14<br>5,15 |
| Y | JP 2008-514542 A  (Corning Inc.),<br>08 May 2008 (08.05.2008),<br>claims 1, 4; examples | 5 |
| Y | JP 11-060240 A  (Tsutomu FUKUDA),<br>02 March 1999 (02.03.1999),<br>claim 1 | 15 |
| A | JP 6-305828 A  (Kawasaki Rozai Kabushiki Kaisha),<br>01 November 1994 (01.11.1994),<br>claims 1, 2; paragraph [0006] | 1-15 |

| ☒ | Further documents are listed in the continuation of Box C. | ☒ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 December, 2009 (21.12.09) | 28 December, 2009 (28.12.09) |

| Name and mailing address of the ISA/<br>Japanese Patent Office | Authorized officer |
|---|---|
| Facsimile No. | Telephone No. |

Form PCT/ISA/210 (second sheet) (April 2007)

14

**INTERNATIONAL SEARCH REPORT**

International application No.

PCT/JP2009/068904

C (Continuation).    DOCUMENTS CONSIDERED TO BE RELEVANT

| Category* | Citation of document, with indication, where appropriate, of the relevant passages | Relevant to claim No. |
|---|---|---|
| A | JP 6-279976 A  (NGK Insulators, Ltd.), 04 October 1994 (04.10.1994), paragraph [0012] | 1-15 |

Form PCT/ISA/210 (continuation of second sheet) (April 2007)

**INTERNATIONAL SEARCH REPORT**

| International application No. |
| --- |
| PCT/JP2009/068904 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    The invention of claim 1 is not novel and does not have a special technical feature since it is disclosed in document 1 mentioned below.  Consequently, the invention of claim 1 does not satisfy the requirement of unity of invention. The invention of claims mentioned below is considered as the main invention. Claims 1, 2 and 8

Document 1: JP 2004-026508 A (Tsutomu FUKUDA), 29 January 2004 (29.01.2004), claims 1-3, paragraphs [0022]-[0024], examples

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**
Information on patent family members

| International application No. |
|---|
| PCT/JP2009/068904 |

| | | | |
|---|---|---|---|
| JP 2004-026508 A | 2004.01.29 | US 2005/0181929 A1 | 2005.08.18 |
| | | WO 2003/091183 A1 | 2003.11.06 |
| | | EP 1514857 A1 | 2005.03.16 |
| | | CN 1649805 A | 2005.08.03 |
| | | CA 1649805 A | 2003.11.06 |
| | | TW 276619 B | 2007.03.21 |
| | | | |
| JP 2008-514542 | 2008.05.08 | US 2006/0064957 A | 2006.03.30 |
| | | WO 2006/039255 A2 | 2006.04.13 |
| | | EP 1805112 A2 | 2007.07.11 |
| | | CN 101027256 A | 2007.08.29 |
| | | | |
| JP 11-060240 A | 1999.03.02 | US 6197248 B1 | 2001.03.06 |
| | | CA 2279809 A | 2001.02.09 |
| | | | |
| JP 6-305828 A | 1994.11.01 | (Family: none) | |
| | | | |
| JP 6-279976 A | 1994.10.04 | (Family: none) | |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005105704 A